**Europäisches Patentamt**

**European Patent Office**

**Office européen des brevets**

(19)

(11) Veröffentlichungsnummer: **0 527 390 A1**

# (12) EUROPÄISCHE PATENTANMELDUNG

(21) Anmeldenummer: **92112896.3**

(22) Anmeldetag: **29.07.92**

(51) Int. Cl.5: **C08L 23/00**, C08L 25/04, C08L 101/00

(30) Priorität: **14.08.91 DE 4126829**

(43) Veröffentlichungstag der Anmeldung:
**17.02.93 Patentblatt 93/07**

(84) Benannte Vertragsstaaten:
**BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Seelert, Stefan, Dr.**
**Albrecht-Duerer-Ring 23a**
**W-6710 Frankenthal(DE)**
Erfinder: **Klaerner, Peter, Dr.**
**Hauptstrasse 62**
**W-6719 Battenberg(DE)**
Erfinder: **Echte, Adolf, Prof. Dr.**
**Leuschnerstrasse 42**
**W-6700 Ludwigshafen(DE)**

(54) **Thermoplastische Formmassen.**

(57)  Formmasse, enthaltend
   A: ein oder mehrere Styrolpolymerisate A,
   B: ein oder mehrere Polyolefine B,
   C: mindestens ein weiteres thermoplastisches Polymerisat C,
   D: mindestens ein als Verträglichkeitsvermittler dienendes Polymerisat D und
   E: wenn erforderlich, weitere Zusatzstoffe E in üblichen Mengen,
die als Polymerisat D mindestens ein zwischen A und B wirkender Verträglichkeitsvermittler D1 und mindestens ein zwischen A und C oder B und C wirkender Verträglichkeitsvermittler D2 bzw. D3 in der thermoplastischen Formmasse enthält.

EP 0 527 390 A1

Formmassen, die Mischungen sind, d.h. aus verschiedenen Polymerisaten bestehen, sind aus mehreren Gründen interessant. Zum einen besteht ein offensichtlicher Bedarf für thermoplastische Formmassen mit neuen Eigenschaftskombinationen. Die Entwicklung neuer Polymere ist aufwendig und scheitert vor allem am Mangel an gut zugänglichen neuen Monomeren. Die Herstellung von Polymermischungen (Blends) ist ein möglicher Weg, um Formmassen zu erhalten, deren Eigenschaften eine Kombination derer der Ausgangsprodukte sind oder diese sogar durch synergistische Effekte übertreffen.

Ein Anlaß zur Schaffung zusammengesetzter thermoplastischer Formmassen ist auch die Notwendigkeit, gebrauchte Kunststoffe wieder aufzuarbeiten, die häufig als mechanische Mischungen verschiedener Polymerer anfallen, wobei i.a. wesentliche Bestandteile Styrolpolymerisate und Polyolefine sind. Im Gegensatz zu anderen verfolgten Wegen wie z.B. einer Trennung der Kunststoffe durch selektives Lösen oder einem chemischen Abbau der Kunststoffe zu Monomeren oder niedermolekularen Verbindungen bietet die Verarbeitung ungetrennter Kunststoffmischungen zu Polymerblends z.B. durch Extrusion einen einfachen Weg zu wiederverwendbaren Formmassen.

Solche aus verschiedenen Polymeren aufgebaute Polymermischungen weisen aber in der Regel, hervorgerufen durch die thermodynamisch bedingte Unverträglichkeit der meisten Polymere, ungenügende mechanische Eigenschaften auf.

Bei binären Mischungen zweier unverträglicher Polymerisate ist es möglich, durch die Zugabe von Verträglichkeitsvermittlern die mechanischen Eigenschaften stark zu verbessern. Die Verträglichkeitsvermittler bewirken dabei in der Regel eine Erniedrigung der Grenzflächenspannung und eine Anhebung der Grenzflächenhaftung. Als Verträglichkeitsvermittler werden meist andere Polymerisate oder Copolymerisate eingesetzt, wobei die Zusammensetzung und der Aufbau des Verträglichkeitsvermittlersstark von der Polymermischung abhängt. Eine Übersicht über Verträglichkeitsvermittler für Polymerblends wird z.B. von Gaylord in J. Macromol. Sci. - Chem. A 26 (1989), 1211 gegeben.

Es wurden auch schon Verträglichkeitsvermittler für Gemische aus drei unverträglichen Polymerisaten vorgeschlagen. Z.B. wird in DL 224 604 der Einsatz bestimmter oberflächenaktiver Substanzen als Verträglichkeitsvermittlerin Mischungen aus Polyolefinen und Polyvinylchlorid und/oder Polystyrol beschrieben, wobei jede dieser Substanzen alleine als Verträglichkeitsvermittler in der Dreiermischung wirkt.

Es wurde nun gefunden, daß die mechanischen Eigenschaften nicht nur durch die Zugabe von speziellen, für dieses System entwickelten Verträglichkeitsvermittlern verbessert werden, sondern allgemein Polymermischungen aus Styrolpolymerisaten, Polyolefinen und mindestens einem weiteren thermoplastischen Polymerisat günstigere Eigenschaften erhalten, wenn mehrere, jeweils zwischen zwei Polymerisaten wirkende Verträglichkeitsvermittler zugegeben werden. Dies ermöglicht es, Formmassen aus mehreren Polymerisaten herzustellen, wenn ein Verträglichkeitsvermittler für jeweils zwei Polymerisate bekannt ist, ohne für das jeweilige Mehrkomponentensystem einen speziellen Verträglichkeitsvermittler entwickeln zu müssen.

Unmittelbarer Erfindungsgegenstand ist eine thermoplastische Formmasse, enthaltend

A: ein oder mehrere Styrolpolymerisate A,

B: ein oder mehrere Polyolefine B,

C: mindestens ein weiteres thermoplastisches Polymerisat C,

D: mindestens ein als Verträglichkeitsvermittler dienendes Polymerisat D und

E: wenn erforderlich, weitere Zusatzstoffe E in üblichen Mengen,

die erfindungsgemäß als Polymerisat D mindestens einen zwischen A und B wirkenden Verträglichkeitsvermittler D1 und mindestens einen zwischen A und C oder B und C wirkenden Verträglichkeitsvermittler D2 bzw. D3 enthält.

Beschreibung der erfindungsgemäßen Bestandteile

Bestandteil (Komponente) A sind ein oder mehrere Styrolpolymerisate, die in der erfindungsgemäßen Formmasse zu 9 bis 80 und bevorzugt 20 bis 55 Gew.-%, bezogen auf das Gesamtgewicht der Bestandteile A bis D, enthalten sind.

A kann ein Styrolhomopolymerisat sein, das in bekannter Weise in Lösung, Suspension oder wäßriger Emulsion oder vorzugsweise in Masse hergestellt wurde.

A kann auch schlagzähes Polystyrol sein, d.h. einen Kautschuk zur Schlagzähmodifizierung enthalten. Die schlagzähen Styrolpolymerisate können durch Polymerisation von Styrol in Gegenwart von Kautschuk oder Einmischen eines Kautschuks in das Styrolpolymerisat hergestellt worden sein. Vorzugsweise wird schlagfestes Polystyrol verwendet, das durch Polymerisation von Styrol in Gegenwart des Kautschuks hergestellt ist.

2

Als Kautschuk werden zur Schlagzähmodifizierung von Styrolpolymerisaten geeignete natürliche oder synthetische Kautschuke eingesetzt. Als Kautschuke kommen außer Naturkautschuk z.B. Polybutadien, Polyisopren und Mischpolymerisate des Butadiens und/oder Isoprens mit Styrol und anderen Comonomeren, die eine Glastemperatur unter -20°C (nach K.H. Illers und H. Breuer, Kolloidzeitschrift 176 (1961) S. 110) besitzen, in Betracht. Besonders eignen sich Butadienpolymerisate mit einem 1,4-cis-Gehalt, der zwischen 25 und 99 Gew.-% liegt. Es können aber auch Acrylkautschuke, EPDM-, Silikon-, Polybutylen- und Polyoctenamerkautschuke eingesetzt werden.

Die Komponente A kann neben Styrol in untergeordneter Menge auch Comonomere enthalten. Als Comonomere des Styrols kommen außer kern- oder seitenkettenalkylierten Styrolen auch andere Monomere wie z.B. (Meth)acrylsäure, (Meth)acrylsäureester mit 1 bis 4 C-Atomen im Alkylrest, Acrylnitril und Maleinsäureanhydrid sowie Maleinsäureimide in Betracht. Der Gehalt an Comonomeren im Styrolpolymerisat oder in der Hartmatrix des schlagzähmodifizierten Styrolpolymerisats soll erlauben, daß die Copolymerisate mit einem ausschließlich aus Styrol aufgebauten Polymerisat einphasig mischbar sind.

Verfahren zur Herstellung solcher Styrolpolymerisate sind bekannt und werden z.B. in "Ullmanns Encyklopädie der technischen Chemie", 4. Auflage, Band 19, Seiten 265 bis 295, Verlag Chemie, Weinheim oder H. Gerrens, Chem. Ing. Tech. 52 (1980), 477 beschrieben.

Geeignete Styrolpolymerisate sind größtenteils handelsüblich und weisen eine VZ der Hartmatrix zwischen 50 und 130 ml/g (0,5 %ig in Toluol bei 23°C) auf.

Mit Polystyrol verträgliche Polymere wie z.B. Polyphenylenether oder Blends aus Polyphenylenether und Polystyrol können für die Zwecke der Erfindung ebenfalls als Komponente A verwendet werden.

Die Komponente B ist in den erfindungsgemäßen Formmassen in einer Menge von 9 bis 80 und bevorzugt von 20 bis 55 Gew.-% enthalten.

Für B kommen ein oder mehrere Homo- oder Co-Polymerisate von $\alpha$-Olefinen mit 2 bis 10 Kohlenstoffatomen oder deren Mischungen in Frage. Bevorzugt sind $\alpha$-Olefine mit 2 bis 6-Kohlenstoffatomen. Die Polyolefine können sich ableiten von unverzweigten $\alpha$-Olefinen wie 1-Buten, 1-Penten, 1-Hexen, 1-Hepten, 1-Octen und bevorzugt Ethylen sowie Propylen. Weiter kommen $\alpha$-Olefine mit verzweigten Alkyl- oder Cycloalkylresten wie 3-Methyl-1-en, 4-Methylpent-1-en oder Vinylcyclohexan sowie Vinylcyclopentan in Frage.

Bevorzugt wird Polypropylen, das z.B. nach dem Gasphasenverfahren hergestellt worden ist und einen Schmelzflußindex (MFI 190/5) von 0,1 bis 90 g/10 min aufweist. Gut geeignet ist auch Polyethylen, hergestellt nach dem Hoch-, Mittel- oder Niederdruckverfahren mit einer Dichte zwischen 0,91 und 0,97 g/cm$^3$, oder Copolymerisate von Ethylen, z.B. mit Vinylester wie Vinylacetat oder Vinylpropionat, mit Acrylestern oder mit Propylen. Der Comonomerengehalt der Ethylencopolymerisate liegt zwischen 1 und 65 Gew.-%, vorzugsweise zwischen 10 und 45 Gew.-%. Der Schmelzflußindex der Ethylenpolymerisate kann in einem weiten Bereich schwanken und beträgt vorzugsweise 0,5 bis 40 g/10 min (MFI 190/2,16). Verfahren zur Herstellung geeigneter Polyolefine sind bekannt und werden z.B. in "Ullmanns Encyklopädie der technischen Chemie", 4. Auflage, Band 19, Seiten 167 bis 226, Verlag Chemie, Weinheim, beschrieben.

Als Komponente C im Sinne der Erfindung werden weder mit Polystyrol noch mit Polyolefinen einphasig mischbare Polymerisate verstanden, wie Polyester, Polyacrylat, Polyvinylchlorid, Styrolcopolymere, Polyamid und Polycarbonat. Es können eines oder mehrere dieser Polymerisate eingesetzt werden. Die Polymerisate C sind in der erfindungsgemäßen Formmasse in Mengen von 9 bis 80, bevorzugt 20 bis 55 Gew.-% enthalten.

Polyester sind alle Polymerisate, die sich von Dicarbonsäuren und Dialkoholen und/oder Hydroxycarbonsäuren oder den entsprechenden Lactonen ableiten, wie z.B. Polyethylenterephthalat, Polybutylenterephthalat, Poly-1,4-cyclohexandimethylenterephthalat und Polyhydroxybenzoate sowie Block-Copolyetherester, die sich von Polyethern mit endständigen Hydroxylgruppen ableiten. Es können auch schlagzähmodifizierte oder verstärkte Polyester eingesetzt werden.

Polyacrylate sind Polymere von Acrylestern. Bevorzugtes Monomer ist Methylmethacrylat. Methylmethacrylat kann radikalisch homopolymeri-siert oder mit anderen Acrylaten wie Ethyl- oder Methylacrylat copolymerisiert werden. Es können auch schlagzähmodifizierte Polyacrylate eingesetzt werden.

Polyvinylchlorid sind alle auf Basis von Vinylchlorid hergestellten Polymerisate. Es können Homo- oder Copolymerisate mit anderen Monomeren wie. z.B. Vinylacetat, Maleinsäureanhydrid, Vinylethern, Propylen oder N-Cyclohexylmaleimid, sein. Es können auch Mischungen mit Vinylidenchlorid eingesetzt werden. Die Polyvinylchloride können schlagzähmodifiziert, weichgemacht oder verstärkt sein.

Unter Styrolcopolymeren sind alle mit Polystyrol nicht einphasig mischbaren Copolymerisate aus Styrol und (i.d.R. einem höheren Anteil an) Acrylnitril, Maleinsäureanhydrid, Maleinsäureimiden, (Meth)acrylsäure oder (Meth)acrylsäureestern zu verstehen. Diese Styrolcopolymere können auch schlagzähmodifiziert sein. Beispiele für solche Styrolcopolymere sind z.B. SAN (Styrol-Acrylnitril-Copolymer), ABS (Acrylnitril-Styrol-Butadien-Copolymer), ASA (Acrylnitril-Styrol-Acrylatkautschuk- Copolymer), AES (Acrylnitril-EP(D)M-Styrol-Copolymer), MBS (Methacrylat-Butadien-Styrol-Copolymer) oder Styrol-Maleinsäureanhydrid-Copolymer.

Polyamid sind die aus Diaminen und Dicarbonsäuren und/oder Aminocarbonsäuren oder den entsprechenden Lactamen erhältlichen Polymerisate oder Copolymerisate. Beispiele sind Polyamid 6, Polyamid 11, Polyamid 12, Polyamid 46, Polyamid 66, Polyamid 610, Polyamid 612, Polytrimethylhexamethylenterephthalamid, Polyhexanmethylenisophthalamid oder Copolymere mit Polyethern wie z.B. Polyethylenglycol, Polypropylenglycol oder Polytetramethylenglycol. Es können auch schlagzähmodifizierte oder verstärkte Polyamide eingesetzt werden.

Polycarbonate sind Polymerisate, die in der Hauptkette des Polymeren -O-C(O)-O-Einheiten und Phenylen- oder substituierte Phenylen-Einheiten enthalten.

Die unter den Begriff "Komponente C" fallenden Polymeren sind i.a. handelsüblich und ihre Herstellung ist allgemein bekannt.

Als Komponente D enthalten die Formmassen erfindungsgemäß mehrere Verträglichkeitsvermittler. Diese sind in der erfindungsgemäßen Formmasse in einer Menge von insgesamt 2 bis 25, bevorzugt 5 bis 20 und insbesondere 7 bis 15 Gew.-% enthalten. Der zwischen A und B wirkende Verträglichkeitsvermittler D1 und der zwischen A und C oder B und C wirkende Verträglichkeitsvermittler D2 bzw. D3 soll in der erfindungsgemäßen Formmasse in jeweils einer Menge von mindestens 1 Gew.-% enthalten sein. Die Verträglichkeitsvermittler D1 und D2 bzw. D3 oder D1, D2 und D3 können in der erfindungsgemäßen Formmasse zu gleichen Teilen enthalten sein, es ist aber auch möglich, die Verträglichkeitsvermittler in unterschiedlichen Mengen zuzusetzen.

Unter Verträglichkeitsvermittlern sind polymere Stoffe zu verstehen, die bei Zugabe zu einer Mischung aus zwei unverträglichen, d.h. zwei Phasen ausbildenden Polymerisaten die mechanischen Eigenschaften der Mischung verbessern. Verbunden ist dies meist mit einer Abnahme der Grenzflächenspannung zwischen den Polymeren und einer Vergrößerung der Grenzfläche, d.h. die Morphologie der Mischung wird feiner.

Die Substanzen, die als Verträglichkeitsvermittler dienen, können je nach den Polymerisaten, die miteinander verträglich gemacht werden sollten, unterschiedlich sein.

Es ist möglich, Block-, Pfropf- oder Kammcopolymere als Verträglichkeitsvermittler einzusetzen. Dabei sollte jeweils ein Bereich des Verträglichkeitsvermittlers mit einer Komponente der Polymermischung und ein weiterer Bereich des Verträglichkeitsvermittlers mit der anderen Komponente der Polymermischung verträglich sein. Diese Verträglichkeit zwischen einem Bereich des Verträglichkeitsvermittlers und eine Blendkomponente kann darauf beruhen, daß beide chemisch identisch oder ähnlich sind, oder daß beide zwar chemisch unterschiedlich, aber einphasig miteinander mischbar sind.

Die in den erfindungsgemäßen Formmassen als Komponente D1 enthaltenen Verträglichkeitsvermittler zwischen Styrolpolymerisaten A und Polyolefinen B sind in der Regel Block- oder Pfropfcopolymere aus vinylaromatischen Verbindungen, bevorzugt Styrol, und Dienen, bevorzugt Butadien oder Isopren. Das Blockcopolymer kann in Form eines Zwei-Blocks (A-B), in Form eines Drei-Blocks (A-B-A), in Form eines Multiblocks ((A-B)$_n$) oder in Form eines Sternblocks vorliegen. Die Dien-Blöcke der Block- oder Pfropfcopolymere können selektiv hydriert oder teilhydriert sein. Der Einsatz solcher Verträglichkeitsvermittler in Mischungen aus Styrolpolymerisaten und Polyolefinen ist z.B. aus EP 250 970 oder EP 310 051 bekannt. Solche Blockcopolymere können auch als Verträglichkeitsvermittler zwischen Polyolefinen B und anderen Polymerisaten C eingesetzt werden (WO 90/04815).

Als Verträglichkeitsvermittler im Sinne der Erfindung können auch Polymere eingesetzt werden, die funktionelle Gruppen enthalten, die mit einer Komponente der binären Polymermischung reagieren können und somit in situ Pfropf- oder Blockcopolymere erzeugen. Es können, wie z.B. in DE 2 245 597 oder US 3 373 222 beschrieben, statistische Copolymere sein, deren funktionelle Monomere mit einer der Komponenten der Polymermischung reagieren können und im übrigen Monomeren, die die andere Komponente der Polymermischung aufbauen. So werden z.B. in US 3 373 222 Copolymere aus Ethylen und Methacrylsäure als Verträglichkeitsvermittler für Mischungen aus Polyethylen und Polyamid beschrieben. Funktionelle Gruppe enthaltende Verträglichkeitsvermittler können Blockcopolymere sein, die nur in einem Block die funktionellen Gruppen tragenden Monomere enthalten. Es ist auch möglich, die funktionellen Gruppen in einer sich an die Polymerisation anschließenden Reaktion auf den Verträglichkeitsvermittler aufzubringen. So wird z.B. in US 4 174 358 in Mischungen aus Polyamid und EPDM-Kautschuk ein Maleinsäureanhydrid-haltiger EPDM-Kautschuk als Verträglichkeitsvermittler eingesetzt, der durch eine "ene"-Reaktion zwischen Maleinsäureanhydrid und EPDM-Kautschuk hergestellt wurde.

Als Verträglichkeitsvermittler können in bestimmten Mischungen auch Homopolymere wirken. So wird in EP 391 296 Polycyclohexylmethacrylat als Verträglichkeitsvermittler für Mischungen aus schlagzähmodifiziertem Polystyrol z.B. ABS beschrieben.

Als Komponente E kann die erfindungsgemäße Formmasse zur weiteren Verbesserung der Eigenschaften übliche Zusatzstoffe enthalten. Bei diesen Zusatzstoffen handelt es sich im allgemeinen um Antioxidantien oder andere Stabilisatoren, Gleit- oder Entformungsmittel, Schmiermittel, Antistatika, Färbemittel wie Farbstoffe oder Pigmente, Flammschutzmittel oder Verstärkungsmaterialien.

Die erfindungsgemäße Formmasse kann bis 50 Teile, bevorzugt 0,1 bis 20 Teile E, bezogen auf 100 Teile der Summe aus A bis D enthalten.

Die Formmassen werden durch übliches Mischen der Bestandteile erhalten. Vorzugsweise geschieht das Vermischen bei höheren Temperaturen, z.B. in der Schmelze. Dies kann durch gemeinsames Verwalzen, Kneten oder Extrudieren in den üblichen Vorrichtungen geschehen. Die Reihenfolge des Mischens der Komponenten kann variiert werden, es können ausgewählte Komponenten vorgemischt sein, oder es können alle Komponenten gemeinsam gemischt werden.

Beispiele

Für die Herstellung der Beispiele und Vergleichsversuche wurden folgende Produkte verwendet:

Komponente A

A/1    Schlagfestes Polystyrol mit einem Polybutadiengehalt von 8 Gew.-% und einem mittleren Teilchendurchmesser der Weichkomponente von 2,7 mm. Die VZ der Hartmatrix beträgt 70 ml/g (0,5 %ig in Toluol bei 23° C).

A/2    Homopolystyrol mit einer VZ von 96 ml/g (0,5 %ig in Toluol bei 23° C).

Komponente B

B/1    Lineares Polyethylen niedriger Dichte mit einer Dichte von 0,920 g/cm$^3$ und einem MFI (190/2,16) zwischen 0,9 und 1,2 g/10 min.

B/2    Polyethylen hoher Dichte mit einer Dichte von 0,957 g/cm$^3$ und einem MFI (190/5) von 0,4 g/10 min.

B/3    Polypropylen-Homopolymerisat mit einem MFI (230/2,16) von 15 ml/10 min.

Komponente C

C/1    Schlagzähmodifiziertes Polybutylenterephthalat mit ca. 20 Gew.-% einer dispersen Kautschukphase auf Basis n-Butylacrylat, gepfropft mit SAN. Die VZ der Hartmatrix beträgt 130 ml/g (0,5 %ig in Phenol/o-Dichlorbenzol (1:1) bei 25° C).

C/2    Schlagzähmodifiziertes Polymethylmethacrylat mit ca. 45 Gew.-% einer dispersen Kautschukphase auf Basis n-Butylacrylat und Styrol, gepfropft mit PMMA. Das mittlere Molekulargewicht ($M_n$) der Hartmatrix beträgt etwa 100 000 g/mol.

C/3    Acrylnitrl-Butadien-Styrol-Copolymer (ABS) mit einem Polybutadiengehalt von 20 Gew.-%. Die Hartmatrix besitzt einen Acrylnitrilanteil von 35 Gew.-% und eine VZ von 80 ml/g (0,5 %ig in Methylethylketon bei 23° C).

Komponente D

Die nachstehend beschriebenen Beispiels-Bestandteile D1/1 bis D3/2 entsprechen den verschiedenen, vorstehend als D1, D2 und D3 bezeichneten Verträglichkeitsvermittlern.

D1/1    Polymodal aufgebautes Sternblockcopolymer mit ca. 75 Gew.-% Styrol und 25 Gew.-% Butadien gemäß der Lehre der DE-OS 25 50 227.

D2/1    Statistisches Copolymer aus Styrol und Maleinsäureanhydrid mit 8 Gew.-% Maleinsäureanhydrid. Das mittlere Molekulargewicht ($M_n$) beträgt etwa 100 000 g/mol.

D3/1    Mit ca. 0,8 Gew.-% Maleinsäureanhydrid gepfropftes Ethylen-Propylen-Copolymer mit etwa 50 Gew.-% Ethylen. Der MFI (190/2,16) liegt bei 9,5 g/10 min.

D2/2    Styrol-Methylmethacrylat-Blockcopolymer mit ca. 10 Gew.-% Methylmethacrylat.

D3/2    Pfropfcopolymer aus linearem Polyethylen mit Polymethylmethacrylat. Der Polymethylmethacrylatanteil beträgt 30 Gew.-%. Der MFI (190/2,16) liegt bei 2 g/10 min.

Die Compoundierung der Beispiele und Vergleichsversuche erfolgte auf einer ZSK 30 der Firma Werner und Pfleiderer bei 200 U/min und einem Durchsatz von 10 kg/h. Die Komponenten wurden in einem Fluidmischer vorgemischt und über eine Bandwaage in den Extruder dosiert. Die Prüfung der mechanischen Eigenschaften der Blends erfolgte an spritzgegossenen Probekörpern. Je nach Zusammensetzung der Polymermischungen wurden verschiedene Temperaturen zur Compoundierung der Blends und zur Herstellung der spritzgegossenen Probekörper gewählt.

Es wurden folgende Prüfungen durchgeführt:
Schmelzflußindex MFI nach DI 53 735 bei 200°C bzw. 230°C mit jeweils 5 kg Belastung Zugfestigkeit, Reißfestigkeit und Reißdehnung nach DIN 53 455
Durchstoßarbeit (Gesamtarbeit $W_{ges}$) nach DIN 53 443.

In den Beispielen 1 und 2 (Tabelle 1) erkennt man eine deutliche Zunahme der multiaxialen Zähigkeit, ausgedrückt durch die Durchstoßarbeit, und ebenfalls eine Zunahme der Reißdehnung, verglichen mit Vergleichsversuch V1. Die verträglichkeitsvermittelnde Wirkung der Komponenten D1 bis D3 wird auch in der Absenkung des MFI deutlich, der auf eine Reduzierung der Größe der Phasendomänen in den Polymermischungen zurückzuführen ist.

In den Beispielen 3 und 4 (Tabelle 2) ist ebenfalls eine deutliche Steigerung der Zähigkeit zu beobachten, wobei besonders die Reißdehnung verbessert wird.

Die Vergleichsversuche in Tabelle 3 zeigen, daß die in den erfindungsgemäßen Mischungen in Kombination eingesetzten Verträglichkeitsvermittler jeweils in den Mischungen zweier Polymere als Verträglichkeitsvermittler dienen.

In den Beispielen 5 bis 7 (Tabelle 4) ist illustriert, daß auch dann brauchbare Formmassen erhalten werden, wenn die Komponenten A, B oder C aus mehreren Bestandteilen bestehen.

Zusammensetzung und Eigenschaften des erfindungsgemäßen und nicht erfindungsgemäßen Formmassen

Tabelle 1

| Beispiel | | 1 | 2 | |
|---|---|---|---|---|
| Vergleichsversuch | | | | V1 |
| Compoundiertemperatur | [°C] | 250 | 250 | 250 |
| Spritztemperatur | [°C] | 250 | 250 | 250 |
| A/1 | [Gew.-%] | 30,6 | 28,3 | 33,3 |
| B/1 | [Gew.-%] | 30,6 | 28,3 | 33,3 |
| C/1 | [Gew.-%] | 30,6 | 28,3 | 33,3 |
| D1/1 | [Gew.-%] | 2,7 | 5 | |
| D2/1 | [Gew.-%] | 2,7 | 5 | |
| D3/1 | [Gew.-%] | 2,7 | 5 | |
| MFI (5/230) | [g/10 min] | 7,4 | 4,6 | 15,2 |
| Streckspannung | [N/mm$^2$] | 22,3 | 21,4 | 21,2 |
| Reißfestigkeit | [N/mm$^2$] | 21,5 | 20,4 | 20,9 |
| Reißdehnung | [%] | 26 | 28 | 5 |
| Durchstoßarbeit | [Nm] | 11 | 17 | 0,6 |

EP 0 527 390 A1

Tabelle 2

| Beispiel<br>Vergleichsversuch | | 3 | 4 | V2 |
|---|---|---|---|---|
| Compoundiertemperatur | [°C] | 220 | 220 | 220 |
| Spritztemperatur | [°C] | 220 | 220 | 220 |
| A/1 | [Gew.-%] | 30,6 | 28,3 | 33,3 |
| B/1 | [Gew.-%] | 30,6 | 28,3 | 33,3 |
| C/1 | [Gew.-%] | 30,6 | 28,3 | 33,3 |
| D1/1 | [Gew.-%] | 2,7 | 5 | |
| D2/1 | [Gew.-%] | 2,7 | 5 | |
| D3/1 | [Gew.-%] | 2,7 | 5 | |
| MFI (5/200) | [g/10 min] | 2,6 | 2,4 | 3,4 |
| Streckspannung | [N/mm$^2$] | 26,5 | 27,1 | 25,5 |
| Reißfestigkeit | [N/mm$^2$] | 25,1 | 25,4 | 24,7 |
| Reißdehnung | [%] | 45 | 55 | 10 |
| Durchstoßarbeit | [Nm] | 3 | 6 | 0,3 |

8

Tabelle 3

| Vergleichsversuch | | V3 | V4 | V5 | V6 | V7 | V8 | V9 | V10 | V11 | V12 |
|---|---|---|---|---|---|---|---|---|---|---|---|
| Compoundiertemperatur | [°C] | 250 | 250 | 250 | 250 | 220 | 220 | 220 | 220 | 220 | 220 |
| Spritztemperatur | [°C] | 250 | 250 | 250 | 250 | 220 | 220 | 220 | 220 | 220 | 220 |
| A/1 | [Gew.-%] | 50 | 46 | | | 50 | 46 | 50 | 46 | | |
| B/1 | [Gew.-%] | | | 50 | 46 | 50 | 46 | | | 50 | 46 |
| C/1 | [Gew.-%] | 50 | 46 | 50 | 46 | | | | | | |
| C/2 | [Gew.-%] | | | | | | | 50 | 46 | 50 | 46 |
| D1/1 | [Gew.-%] | | | | | | | 8 | | | |
| D2/1 | [Gew.-%] | | 8 | | | | | | | | |
| D3/1 | [Gew.-%] | | | | 8 | | | | | | |
| D2/2 | [Gew.-%] | | | | | | | | 8 | | |
| D3/2 | [Gew.-%] | | | | | | | | | | 8 |
| Streckspannung | [N/mm$^2$] | 31,4 | 35,8 | 16,2 | 14,6 | 18,9 | 19,4 | 35,8 | 37,1 | 19,4 | 20 |
| Reißfestigkeit | [N/mm$^2$] | 29,5 | 34,3 | 15,4 | 13,6 | 18 | 19,7 | 32 | 31,9 | 18 | 18,9 |
| Reißdehnung | [%] | 10 | 12 | 9 | 33 | 18 | 102 | 33 | 44 | 14 | 21 |
| Durchstoßarbeit | [Nm] | 5 | 12 | 1 | 21 | 2 | 29 | 0,6 | 2 | 1 | 2 |

EP 0 527 390 A1

Tabelle 4

| Beispiel | | 5 | 6 | 7 |
|---|---|---|---|---|
| Compoundiertemperatur | [°C] | 250 | 250 | 250 |
| Spritztemperatur | [°C] | 250 | 250 | 250 |
| A/1 | [Gew.-%] | 25 | 30 | 25 |
| A/2 | [Gew.-%] | 15 | | |
| B/1 | [Gew.-%] | | 15 | 20 |
| B/2 | [Gew.-%] | 30 | | |
| B/3 | [Gew.-%] | | 15 | |
| C/1 | [Gew.-%] | 20 | 30 | 20 |
| C/3 | [Gew.-%] | | | 20 |
| D1/1 | [Gew.-%] | 2,7 | 5 | 5 |
| D2/1 | [Gew.-%] | 2,7 | | 5 |
| D3/1 | [Gew.-%] | 2,7 | 5 | 5 |
| MFI (5/200) | [g/10 min] | 6,1 | 12,3 | 5,2 |
| Streckspannung | [N/mm²] | 23,6 | 21,8 | 22,6 |
| Reißfestigkeit | [N/mm²] | 22,4 | 21,3 | 20,9 |
| Reißdehnung | [%] | 17 | 25 | 19 |
| Durchstoßarbeit | [Nm] | 10 | 13 | 16 |

**Patentansprüche**

1. Formmasse, enthaltend

   A: ein oder mehrere Styrolpolymerisate A,

   B: ein oder mehrere Polyolefine B,

   C: mindestens ein weiteres thermoplastisches Polymerisat C,

   D: mindestens ein als Verträglichkeitsvermittler dienendes Polymerisat D und

E: wenn erforderlich, weitere Zusatzstoffe E in üblichen Mengen,

dadurch gekennzeichnet, daß als Polymerisat D mindestens ein zwischen A und B wirkender Verträglichkeitsvermittler D1 und mindestens ein zwischen A und C oder B und C wirkender Verträglichkeitsvermittler D2 bzw. D3 in der thermoplastischen Formmasse enthalten ist.

2. Formmasse nach Anspruch 1, enthaltend als Polymerisat D mindestens einen zwischen A und B wirksamen Verträglichkeitsvermittler D1, mindestens einen zwischen A und C wirksamen Verträglichkeitsvermittler D2 und mindestens einen zwischen B und C wirksamen Verträglichkeitsvermittler D3.

3. Formmasse nach Anspruch 1, enthaltend als Polymerisat C ein oder mehrere Polymere aus der Gruppe, die umfaßt Polyester, Polyacrylate, Polyvinylchlorid, Styrolcopolymere, Polyamide und Polycarbonate.

4. Formmasse nach Anspruch 1, enthaltend als Polymerisat D mindestens ein Block-, Pfropf- oder Kamm-Copolymerisat.

5. Formmasse nach Anspruch 4, enthaltend als Polymerisat D1 ein aus Styrol und Butadien oder Isopren aufgebautes Blockcopolymerisat.

6. Formmasse nach Anspruch 5, enthaltend als Polymerisat D1 ein aus Styrol und Butadien aufgebautes Sternblockcopolymerisat.

| Europäisches Patentamt | **EUROPÄISCHER RECHERCHENBERICHT** | Nummer der Anmeldung |
|---|---|---|
| | | EP 92 11 2896 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 291 352 (MONTEDIPE)<br>--- | | C08L23/00<br>C08L25/04<br>C08L101/00 |
| A | US-A-4 892 904 (TING)<br>--- | | |
| A | EP-A-0 042 153 (SWEETHEART PLASICS)<br>--- | | |
| A | EP-A-0 310 051 (BASF)<br><br>----- | | |

| | RECHERCHIERTE SACHGEBIETE (Int. Cl.5) |
|---|---|
| | C08L |

Der vorliegende Recherchenbericht wurde für alle Patentansprüche erstellt

| Recherchenort | Abschlußdatum der Recherche | Prüfer |
|---|---|---|
| DEN HAAG | 02 NOVEMBER 1992 | MEULEMANS R.A.M. |